# FASCICULE DE BREVET EUROPEEN

(11) **EP 1 542 131 B1**
(45) Date de publication et mention de la délivrance du brevet: **07.06.2006**
(21) Numéro de dépôt: 04292872.1
(22) Date de dépôt: 03.12.2004
(51) Int. Cl.: G06F 13/14, H04L 12/46, H04L 29/00

(54) **Procédé de gestion d'un dispositif de mémorisation de données organisées en file d'attente, et dispositif associé**
Verfahren zur Verwaltung eines Speichers mit FIFO-Organisation, und zugehörige Vorrichtung
Method of managing a storage organised as FIFO, and corresponding apparatus

(30) Priorité: 09.12.2003 FR 0314376
(43) Date de publication de la demande: 15.06.2005
(73) Titulaire: Arteris, 75008 Paris (FR)
(72) Inventeur: Douady, César, 91400 Orsay (FR); Boucard, Philippe, 78150 Le Chesnay (FR)
(74) Mandataire: de Kernier, Gabriel

(56) Documents cités:
- US-A- 5 313 649
- US-A- 5 541 932
- US-A- 6 151 316

## Description

La présente invention concerne un procédé de gestion d'un dispositif de mémorisation, en particulier pour des données organisées en file d'attente, et d'un dispositif associé.

Les systèmes électroniques nécessitent des accès à des données nécessaires au système, le système effectuant des traitements avec ces données. Il est donc nécessaire d'avoir des accès en lecture et en écriture.

Les réseaux d'interconnexions sont des moyens de transmission de messages entre différents agents électroniques ou informatiques, ou entités communicantes. Une transmission peut être faite sans effectuer de traitement du message, ou bien en effectuant un traitement du message. On parle dans tous les cas de transmission de messages. On entend par traitement d'un message, par exemple une analyse de données contenues dans le message, ou bien un ajout de données au message.

Un message est, bien entendu, une suite de données informatiques, c'est-à-dire une suite de bits ou d'octets agencés avec une sémantique spécifique, et représentant une information atomique complète. Chaque message comprend un en-tête de message qui comprend principalement l'adresse de destination du message et la taille du message. Un message est soit une requête émise par un agent initiateur de messages, soit une réponse émise par un agent destinataire ou cible de messages.

Un réseau d'interconnexions idéal serait certainement un réseau totalement interconnecté, c'est-à-dire un réseau dans lequel chaque paire d'agents est connectée par une liaison point à point. Cela est cependant irréaliste, car trop compliqué dès que l'on dépasse quelques dizaines d'agents. Il est donc souhaitable que le réseau d'interconnexions puisse assurer l'ensemble des communications entre agents avec un nombre limité de liens par agent.

Dans un réseau d'interconnexions point à point, une entrée d'un agent est reliée à au plus un agent initiateur de messages, ou à au plus un agent de transmission de messages.

Les réseaux d'interconnexions comprennent des dispositifs de transmission ou routeurs ("switch" en langue anglaise), une organisation du réseau assurant le lien entre les routeurs et les autres agents, et un ensemble de routage qui assure la circulation des messages au sein de l'organisation du réseau.

Un routeur est un agent actif du réseau d'interconnexions qui reçoit en entrée des messages venant d'un ou plusieurs agents et qui achemine ou route chacun de ces messages respectivement vers leur agent de destination ou vers un autre routeur. Ce routage est effectué au moyen de l'adresse de l'agent destinataire du message, ou agent cible, qui est présente dans l'en-tête du message à router.

L'organisation d'un réseau constitue la structure physique reliant les différents noeuds ou points de connexions d'un réseau d'interconnexions.

L'ensemble de routage gère la manière dont est routé, ou acheminé, un message depuis un agent source émettant le message jusqu'à un agent destinataire du message à travers des routeurs en empruntant un chemin de routage.

Dans un système d'interconnection, une mémoire organisée en file d'attente ou FIFO en langue anglaise ("First In First Out"), peut parfois être vide de données, alors qu'une requête demande à lire des données dans cette file.

De manière classique, une telle situation est traitée de deux manières différentes, soit la requête est bloquante, soit un message d'erreur, ou d'essai ultérieur, est envoyé en réponse à l'agent émetteur de la requête de lecture. Ces procédés peuvent entraîner un blocage momentané du système, ou bien utiliser inutilement de la bande passante.

Aussi, au vu de ce qui précède, l'invention a pour but d'améliorer le traitement du cas où la file d'attente est vide de données et qu'une requête de lecture demande des données de cette file. Un but est donc d'éviter des blocages du système ou une utilisation inutile de bande passante lorsque ce cas se présente.

Ainsi, selon un aspect de l'invention, il est proposé un procédé de gestion d'un dispositif de mémorisation de données organisées en file d'attente. Lorsque ladite file est vide de données et que ledit dispositif de mémorisation reçoit une requête de lecture de données, ladite requête de lecture est mémorisée dans ladite file, à la place de données habituellement présentes lorsque la file n'est pas vide de données, transformant la file de données en file de requêtes de lecture.

On ne bloque pas le système ou on n'utilise pas de bande passante inutile afin de répondre par un message à l'agent initiateur de la requête de lecture.

Dans un mode de mise en oeuvre préféré, lorsque la file comprend au moins une requête de lecture, la réception d'une nouvelle requête de lecture provoque la mémorisation de ladite nouvelle requête de lecture dans ladite file de requêtes de lecture.

Dans un mode de mise en oeuvre avantageux, lorsque la file comprend au moins une requête de lecture, des données reçues sont directement transmises aux agents ayant émis lesdites requêtes de lecture, et la quantité de données attendue comprise dans lesdites requêtes de lecture est mise à jour.

Dans un mode de mise en oeuvre préféré, lorsque la file comprend au moins une requête de lecture, la réception d'une quantité de données inférieure à la quantité de données demandée par la première requête de lecture de la file de requêtes de lecture provoque le stockage desdites données dans un moyen de mémorisation auxiliaire, en attente d'une arrivée ultérieure de données à mémoriser dans ledit moyen de mémorisation auxiliaire. Ce stockage est effectué jusqu'à ce que la quantité de données stockée dans le moyen de mémorisation auxiliaire soit supérieure ou égale à la quantité de données requise par ladite première requête de lecture de ladite file de requêtes de lecture.

Dans un mode de mise en oeuvre avantageux, lorsque la file comprend au moins une requête de lecture et que la première requête de lecture de ladite file de requête est satisfaite, on supprime ladite première requête de lecture de la file de requêtes de lecture.

Dans un mode de mise en oeuvre préféré, lorsque ladite file de requête de lecture devient vide de requêtes et que des données sont reçues, lesdites données sont stockées dans ladite file vide qui devient une file de données.

En d'autres termes, le procédé est réversible.

Selon un autre aspect de l'invention, il est également proposé un dispositif de mémorisation de données organisées en file d'attente. Le dispositif comprend un moyen de gestion qui, lorsque ladite file est vide de données et que ledit dispositif reçoit une requête de lecture de données, est apte à mémoriser ladite requête de lecture dans ladite file, transformant la file de données en file de requêtes de lecture.

Dans un mode de réalisation préféré, ledit moyen de gestion est apte à mémoriser dans ladite file de requêtes de lecture, lorsque la file comprend au moins une requête de lecture, une nouvelle requête de lecture reçue.

Dans un mode de réalisation avantageux, la file comprenant au moins une requête de lecture, ledit moyen de gestion est apte à transmettre directement des données reçues à l'agent ayant émis la première requête de lecture de la file, et à mettre à jour la quantité de données requise comprise dans ladite requête de lecture.

Dans un mode de réalisation préféré, la file comprenant au moins une requête de lecture, ledit dispositif comprend un moyen de mémorisation auxiliaire apte à stocker une quantité de données reçues inférieure à la quantité de données requise par la première requête de lecture de la file.

Dans un mode de réalisation avantageux, ledit moyen de gestion est apte à supprimer la première requête de lecture de ladite file de requêtes de lecture lorsque la file comprend au moins une requête de lecture et que la première requête de lecture de ladite file de requêtes de lecture est satisfaite.

D'autres buts, caractéristiques et avantages de l'invention apparaîtront à la lecture de la description suivante, donnée à titre d'exemple non limitatif, et faite en référence aux dessins annexés sur lesquels :
- les figures 1, 2, 3, 4a et 4b sont des schémas logiques illustrant le fonctionnement d'un premier mode de réalisation de l'invention;
- les figures 5, 6 et 7 sont des schémas logiques illustrant le fonctionnement d'un second mode de réalisation de l'invention ; et
- La figure 8 est un schéma logique illustrant un mode de réalisation d'un module de gestion d'un dispositif selon un aspect de l'invention.

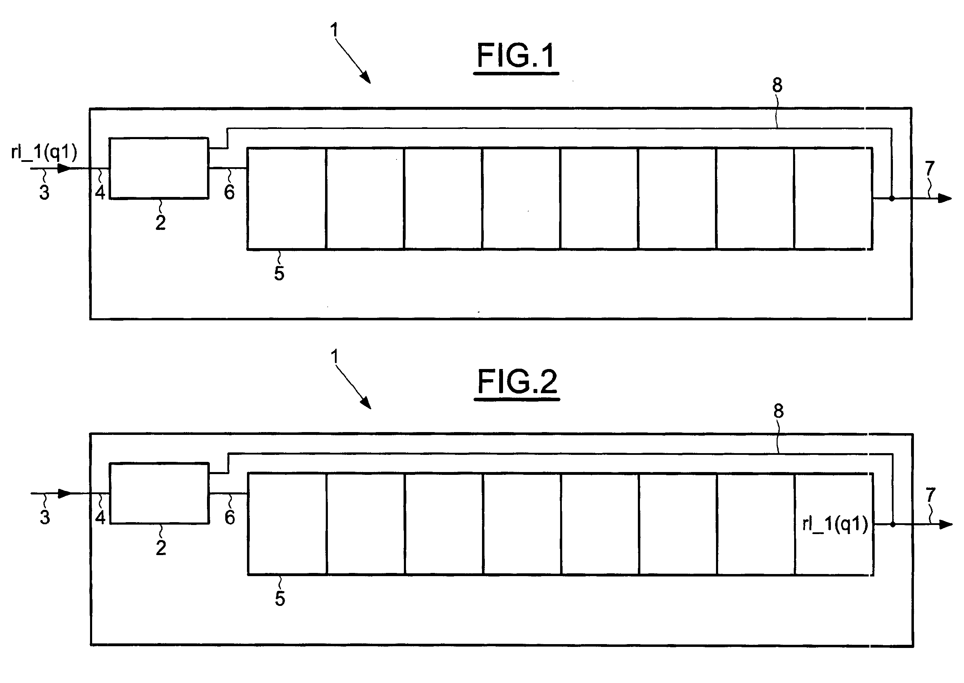

Sur la figure 1, le dispositif 1 de mémorisation de données comprend un module de gestion 2 relié à une entrée 3 du dispositif 1 par une connexion 4, à une mémoire 5 du dispositif 1 organisée en file d'attente par une connexion 6, ainsi qu'à une sortie 7 du dispositif 1 par une connexion 8.

En fonctionnement, une première requête de lecture r1_1 émise par un agent initiateur, demandant la lecture d'une quantité q1 de données dans la file d'attente 5 est reçue à l'entrée 3 par le dispositif 1 de mémorisation de données. Généralement une quantité de données est exprimée en octets. La file d'attente 5 est vide données, et le dispositif 1 ne peut alors pas satisfaire, ou servir, la requête de lecture r1_1.

Le module de gestion 2 stocke alors la requête de lecture r1_1 dans la file d'attente 5, comme cela est représenté sur la figure 2. La file d'attente 5 est alors une file de requêtes de lecture. Les dispositifs classiques ne stockent pas de requêtes dans les files d'attentes qui ne sont que des files de données, et renvoient des messages à l'agent initiateur de la requête ou bloquent le système en attendant des données pour satisfaire la requête. Ceci bloque le système, ou utilise inutilement de la bande passante.

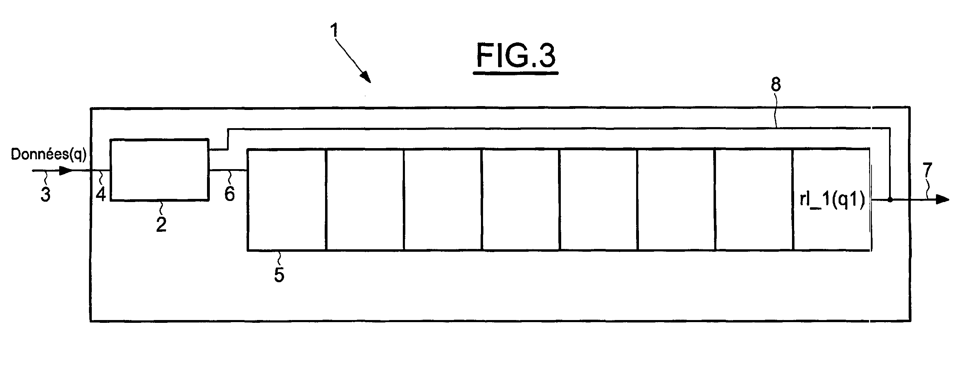

Lorsqu'une quantité q de données arrive au dispositif, comme représenté sur la figure 3, plusieurs cas peuvent se produire.

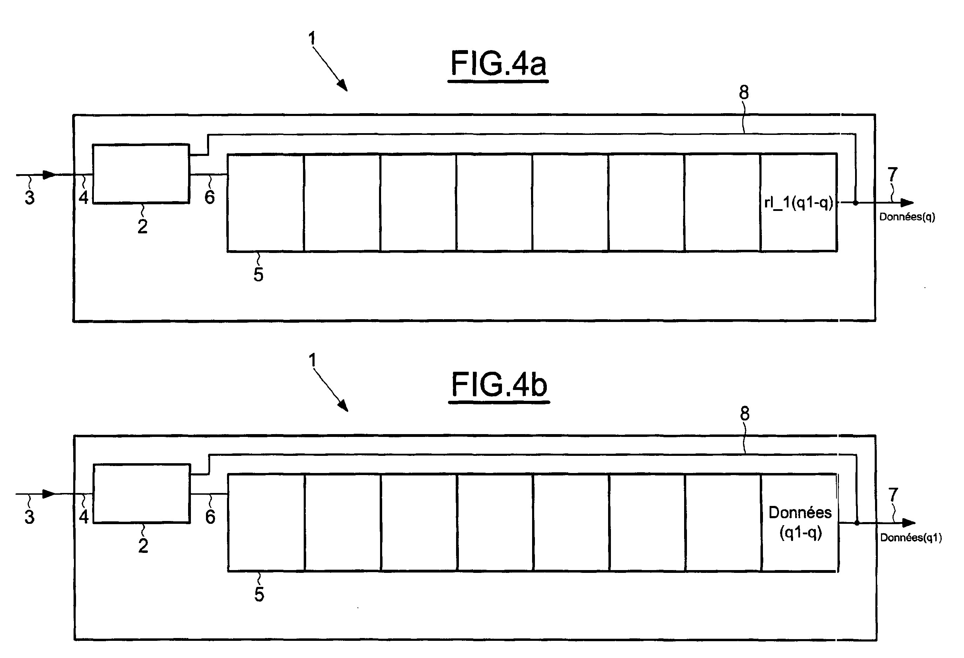

Si la quantité q de données est inférieure à la quantité q1 de donnée requise par la requête de lecture r1_1, première de la file de requêtes de lecture 5, alors la quantité q de données est directement transmise par le module de gestion 2 à la sortie 7, à destination de l'agent initiateur de la requête r1_1, par la connexion 8. Le module de gestion 2 met également à jour la quantité de données requise par la requête de lecture r1_1, comprise dans la requête de lecture r1_1. Cela est illustré sur la figure 4a.

La figure 4b illustre le cas où la quantité de données q est supérieure ou égale à la quantité q1 de donnée requise par la requête de lecture r1_1. Dans ce cas, le module de gestion 2 transmet directement la quantité q de données à la sortie 7, par la connexion 8, ces données étant à destination de l'agent initiateur de la requête de lecture r1_1. La requête de lecture r1_1 est alors servie, ou satisfaite, et le module de gestion 2 supprime la requête de lecture r1_1 de la file 5. La file d'attente 5 est alors vide, car dans cet exemple, elle ne comportait qu'une seule requête de lecture r1_1. La quantité de données q étant alors supérieure ou égale à la quantité q1 de donnée requise par la requête de lecture r1_1, le module de gestion 2 mémorise la quantité q-q1 dans la file 5 vide, qui devient alors une file de données. Bien entendu si q=q1 la file 5 est alors vide.

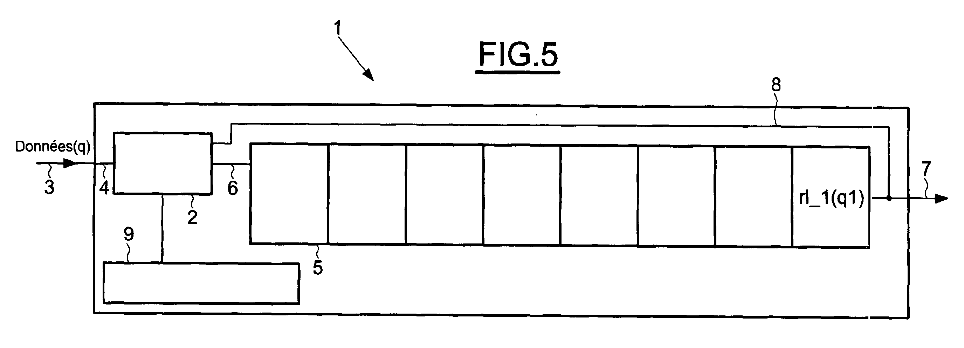

Le second mode de réalisation, illustré par la figure 5, est semblable au premier représenté, et comprend, en outre, un module de mémorisation auxiliaire. Le fonctionnement est identique à celui illustré par les figures 1 et 2, lorsque la file d'attente 5 est initialement vide et qu'une requête de lecture r1_1 arrive en entrée du dispositif 1. La requête de lecture r1_1 a été stockée dans la file 5, alors file de requêtes de lecture, et une quantité q de données arrive en entrée du dispositif 1. Si la quantité de données q1 requise par la requête de lecture r1_1 est inférieure ou égale à la quantité q de données, alors, comme illustré par la figure 4b, la requête de lecture r1_1 est satisfaite directement, sans stockage de la quantité q1 de premières données de la quantité q de données. La requête est détruite, et les données suivantes stockées dans la file 5 alors vide.

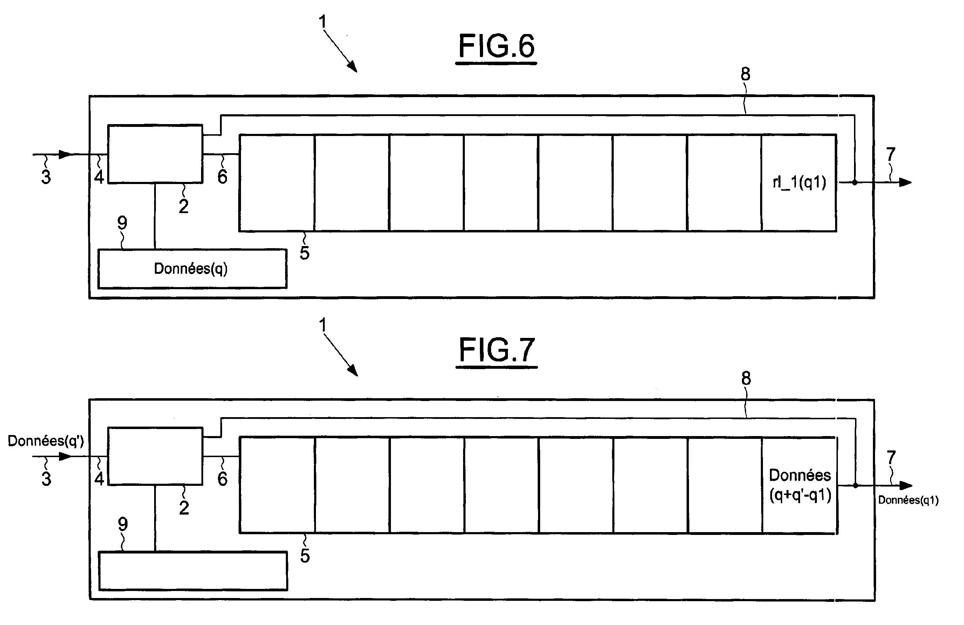

La figure 6 illustre le cas où la quantité q de données est inférieure à la quantité q1 de données requise par la requête de lecture r1_1, première, et ici unique, requête de la file 5 de requêtes de lecture. Le module de gestion 2 stocke alors la quantité q de données dans le module de mémorisation auxiliaire 9. La taille de ce module 9 est conçue de manière à ce qu'il puisse au moins stocker la quantité de données maximale pouvant être demandée par une requête du système.

Puis, lorsqu'une nouvelle quantité q' de données arrive en entrée du dispositif 1 de mémorisation de données, si la quantité de données q+q' est inférieure à la quantité q1, alors le module de gestion 2 mémorise en outre dans le module de mémorisation auxiliaire 9 la quantité q' de données, et on se retrouve dans la même situation que celle de la figure 6, excepté que la quantité de données mémorisée dans le module de mémorisation auxiliaire 9 est différente.

Si une nouvelle quantité q' de données arrive en entrée du dispositif 1 de mémorisation de données, et que la quantité de données q+q' est supérieure ou égale à q1, alors, comme illustré sur la figure 7, le module de gestion 2 transmet directement la quantité de données q stockée dans le module 9, ainsi qu'une partie de la quantité de données q', à la sortie 7 par la connexion 8. La quantité de données transmise en sortie 7 vaut alors q1, et satisfait la requête de lecture r1_1, qui est alors supprimée par le module de gestion 2. La file d'attente 5 est alors vide, car dans cet exemple, elle ne contenait qu'une seule requête de lecture, et il reste des données qui n'ont pas été transmises en sortie. Le module de gestion 2 stocke alors la quantité q+q'-ql de données dans la file d'attente.

Lorsque la file d'attente 5, est une file de données non vide, alors on a un fonctionnement normal d'une file d'attente.

Si la file d'attente 5 est une file de requêtes de lecture pleine, lorsqu'une requête de lecture arrive en entrée du dispositif de mémorisation 1, le moyen de gestion 2 peut renvoyer un message à l'agent initiateur de la requête de lecture, l'informant qu'il faut réessayer plus tard.

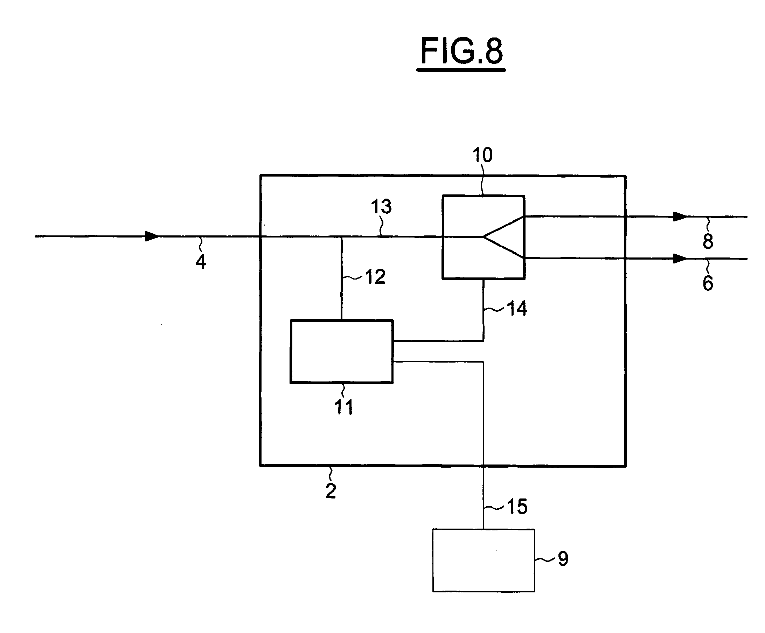

Sur la figure 8, un mode de réalisation du module de gestion 2 est représenté. Le module de gestion 2 comprend un module de commutation 10, et un module de décision 11. La connexion 4 se sépare en deux connexions 12 et 13, la connexion 12 reliant le module de décision 11, et la connexion 13 reliant le module de commutation 10. Une connexion 14 relie le module de décision 11 et le module de commutation 10. Le module de commutation 10 comprend les deux sorties 8 et 6, la sortie 6 étant connectée à la file d'attente 5, et la sortie 8 étant directement reliée à la sortie 7 du dispositif 1. Une connexion 15 optionnelle relie le module de décision 11 et le module de mémorisation auxiliaire 9 optionnel. Le module de décision 11 est apte à différencier une requête d'autres données.

Lorsque qu'une requête de lecture, ou d'autres données, arrivent par la connexion 4 au module de gestion 2, le module de décision 11 gère cette information en commandant le module de commutation 10 pour transmettre les données ou la requête de lecture soit à la file d'attente 5, soit directement à la sortie 7 du dispositif 1 par la connexion 8.

Si le dispositif 1 comprend un module de mémorisation auxiliaire 9, alors le module de décision 11 gère également le stockage et le déstockage de données dans ce module de mémorisation auxiliaire 9.

Les éléments initiateurs de requêtes de lecture ne se trouvent pas dans une situation de blocage, et continuent à travailler durant l'intervalle de temps indéterminé séparant l'instant d'envoi d'une requête de lecture à un agent cible, et l'instant de réception de la réponse à ladite requête.

L'invention permet d'éviter de bloquer inutilement un système d'interconnexions, ou d'utiliser inutilement de la bande passante, lorsqu'une requête de lecture de données arrive à un dispositif de mémorisation organisée en file d'attente, et que cette file est vide de données.

## Revendications

1. Procédé de gestion d'un dispositif de mémorisation (1) de données organisées en file d'attente (5), **caractérisé en ce que**, lorsque ladite file (5) est vide de données et que ledit dispositif de mémorisation (1) reçoit une requête de lecture de données, ladite requête de lecture est mémorisée dans ladite file (5), à la place de données habituellement présentes lorsque la file (5) n'est pas vide de données, transformant la file (5) de données en file (5) de requêtes de lecture.

2. Procédé selon la revendication 1, **caractérisé en ce que**, lorsque la file (5) comprend au moins une requête de lecture, la réception d'une nouvelle requête de lecture provoque la mémorisation de ladite nouvelle requête de lecture dans ladite file (5) de requêtes de lecture.

3. Procédé selon la revendication 1 ou 2, **caractérisé en ce que**, lorsque la file (5) comprend au moins une requête de lecture, des données reçues sont directement transmises aux agents ayant émis lesdites requêtes de lecture, et la quantité de données attendue comprise dans lesdites requêtes de lecture est mise à jour.

4. Procédé selon la revendication 1 ou 2, **caractérisé en ce que**, lorsque la file (5) comprend au moins une requête de lecture, la réception d'une quantité de données inférieure à la quantité de données demandée par la première requête de lecture de la file (5) de requêtes de lecture provoque le stockage desdites données dans un moyen de mémorisation auxiliaire (9), en attente d'une arrivée ultérieure de données à mémoriser dans ledit moyen de mémorisation auxiliaire (9), jusqu'à ce que la quantité de données stockée dans le moyen de mémorisation auxiliaire (9) soit supérieure ou égale à la quantité de données requise par ladite première requête de lecture de ladite file (5) de requêtes de lecture.

5. Procédé selon l'une quelconque des revendications 1 à 4, **caractérisé en ce que**, lorsque la file (5) comprend au moins une requête de lecture et que la première requête de lecture de ladite file (5) de requête est satisfaite, on supprime ladite première requête de lecture de la file (5) de requêtes de lecture.

6. Procédé selon la revendication 5, **caractérisé en ce que**, lorsque ladite file (5) de requête de lecture devient vide de requêtes et que des données sont reçues, lesdites données sont stockées dans ladite file (5) vide qui devient une file (5) de données.

7. Dispositif de mémorisation de données organisées en file d'attente (5), **caractérisé en ce qu'**il comprend un moyen de gestion (2) qui, lorsque ladite file (5) est vide de données et que ledit dispositif (1) reçoit une requête de lecture de données, est apte à mémoriser ladite requête de lecture dans ladite file (5), transformant la file (5) de données en file (5) de requêtes de lecture.

8. Dispositif selon la revendication 7, **caractérisé en ce que** ledit moyen de gestion (2) est apte à mémoriser dans ladite file (5) de requêtes de lecture, lorsque la file (5) comprend au moins une requête de lecture, une nouvelle requête de lecture reçue.

9. Dispositif selon la revendication 7 ou 8, **caractérisé en ce que**, la file (5) comprenant au moins une requête de lecture, ledit moyen de gestion (2) est apte à transmettre directement des données reçues à l'agent ayant émis la première requête de lecture de la file (5), et à mettre à jour la quantité de données requise comprise dans ladite requête de lecture.

10. Dispositif selon la revendication 7 ou 8, **caractérisé en ce que**, la file (5) comprenant au moins une requête de lecture, ledit dispositif (1) comprend un moyen de mémorisation auxiliaire (9) apte à stocker une quantité de données reçues inférieure à la quantité de données requise par la première requête de lecture de la file (5).

11. Dispositif selon l'une quelconque des revendications 7 à 10, **caractérisé en ce que** ledit moyen de gestion (2) est apte à supprimer la première requête de lecture de ladite file (5) de requêtes de lecture lorsque la file (5) comprend au moins une requête de lecture et que la première requête de lecture de ladite file (5) de requêtes de lecture est satisfaite.

## Claims

1. Method of managing a device for memorizing data organized in a queue, wherein, when the said queue is empty of data and the said memorization device receives a data read request, the said read request is memorized in the said queue, instead of the data usually present when the queue is not empty of data, transforming the data queue into a read request queue.

2. Method according to Claim 1, wherein, when the queue comprises at least one read request, the receipt of a new read request causes the said new read request to be memorized in the said read request queue.

3. Method according to Claim 1 or 2, wherein, when the queue comprises at least one read request, received data are directly transmitted to the agents that have sent the said read requests, and the expected quantity of data comprised in the said read requests is updated.

4. Method according to Claim 1 or 2, wherein, when the queue (5) comprises at least one read request, the receipt of a quantity of data smaller than the quantity of data requested by the first read request of the read request queue (5) causes the said data to be stored in an auxiliary memorization means (9), awaiting a later arrival of data to be memorized in the said auxiliary memorization means (9) until the quantity of data stored in the auxiliary memorization means (9) is greater than or equal to the quantity of data required by the said first read request of the said read request queue (5).

5. Method according to Claim 1 or 2, wherein, when the queue comprises at least one read request and the first read request of the said request queue is satisfied, the said first read request is deleted from the read request queue.

6. Method according to Claim 5, wherein, when the said read request queue becomes empty of requests and data are received, the said data are stored in the said empty queue which becomes a data queue.

7. Device for memorizing data organized in a queue, wherein it comprises a management means which, when the said queue is empty of data and the said device receives a data read request, is capable of memorizing the said read request in the said queue, transforming the data queue into a read request queue.

8. Device according to Claim 7, wherein the said management means is capable of memorizing a newly received read request in the said read request queue, when the queue comprises at least one read request.

9. Device according to Claim 7 or 8, wherein, the queue comprising at least one read request, the said management means is capable of transmitting received data directly to the agent that has sent the first read request of the queue and of updating the required quantity of data included in the said read request.

10. Device according to Claim 7 or 8, wherein, the queue comprising at least one read request, the said device comprises an auxiliary memorization means capable of storing a quantity of received data smaller than the quantity of data required by the first read request of the queue.

11. Device according to Claim 7 or 8, wherein the said management means is capable of deleting the first read request from the said read request queue when the queue comprises at least one read request and the first read request of the said read request queue is satisfied.

## Patentansprüche

1. Verfahren zur Verwaltung einer Vorrichtung (1) zum Speichern von in einer Warteschlange (5) organisierten Daten, **dadurch gekennzeichnet, dass**, wenn die Schlange (5) keine Daten enthält, und wenn die Speichervorrichtung (1) eine Anfrage zum Lesen von Daten empfängt, die Leseanfrage in der Schlange (5) an der Stelle von Daten gespeichert wird, die üblicherweise vorhanden sind, wenn die Schlange (5) Daten enthält, wodurch die Schlange (5) von Daten in eine Schlange (5) von Leseanfragen umgewandelt wird.

2. Verfahren nach Anspruch 1, **dadurch gekennzeichnet, dass**, wenn die Schlange (5) mindestens eine Leseanfrage enthält, der Empfang einer neuen Leseanfrage die Speicherung der neuen Leseanfrage in der Schlange (5) von Leseanfragen bewirkt.

3. Verfahren nach Anspruch 1 oder 2, **dadurch gekennzeichnet, dass**, wenn die Schlange (5) mindestens eine Leseanfrage enthält, empfangene Daten direkt an die Akteure übertragen werden, die die Leseanfragen gesendet haben, und die erwartete Datenmenge, die in den Leseanfragen enthalten ist, aktualisiert wird.

4. Verfahren nach Anspruch 1 oder 2, **dadurch gekennzeichnet, dass**, wenn die Schlange (5) mindestens eine Leseanfrage enthält, der Empfang einer Datenmenge, die geringer ist als die Datenmenge, die von der ersten Leseanfrage der Schlange (5) von Leseanfragen angefordert wird, die Speicherung der Daten in einer Hilfsspeichereinrichtung (9) in Erwartung einer späteren Ankunft von in der Hilfsspeichereinrichtung (9) zu speichernden Daten bewirkt, bis die in der Hilfsspeichereinrichtung (9) gespeicherte Datenmenge mindestens gleich der Datenmenge ist, die von der ersten Leseanfrage der Schlange (5) von Leseanfragen angefordert wird.

5. Verfahren nach einem der Ansprüche 1 bis 4, **dadurch gekennzeichnet, dass**, wenn die Schlange (5) mindestens eine Leseanfrage enthält, und wenn die erste Leseanfrage der Anfrage-Schlange (5) erledigt ist, die erste Leseanfrage der Schlange (5) von Leseanfragen gelöscht wird.

6. Verfahren nach Anspruch 5, **dadurch gekennzeichnet, dass**, wenn die Schlange (5) von Leseanfragen keine Anfragen mehr enthält, und wenn Daten empfangen werden, die Daten in der leeren Schlange (5) gespeichert werden, die eine Schlange (5) von Daten wird.

7. Vorrichtung zur Speicherung von in einer Warteschlange (5) organisierten Daten, **dadurch gekennzeichnet, dass** sie eine Verwaltungseinrichtung (2) aufweist, die, wenn die Schlange (5) keine Daten enthält, und wenn die Vorrichtung (1) eine Leseanfrage für Daten empfängt, in der Lage ist, die Leseanfrage in der Schlange (5) zu speichern, wodurch die Schlange (5) von Daten in eine Schlange (5) von Leseanfragen umgewandelt wird.

8. Vorrichtung nach Anspruch 7, **dadurch gekennzeichnet, dass** die Verwaltungseinrichtung (2) in der Lage ist, in der Schlange (5) von Leseanfragen, wenn die Schlange (5) mindestens eine Leseanfrage enthält, eine neue empfangene Leseanfrage zu speichern.

9. Vorrichtung nach Anspruch 7 oder 8, **dadurch gekennzeichnet, dass**, wenn die Schlange (5) mindestens eine Leseanfrage enthält, die Verwaltungseinrichtung (2) in der Lage ist, empfangene Daten direkt an den Akteur zu übertragen, der die erste Leseanfrage der Schlange (5) gesendet hat, und die erforderliche Datenmenge, die in den Leseanfragen enthalten ist, zu aktualisieren.

10. Vorrichtung nach Anspruch 7 oder 8, **dadurch gekennzeichnet, dass**, wenn die Schlange (5) mindestens eine Leseanfrage enthält, die Vorrichtung (1) eine Hilfsspeichereinrichtung (9) aufweist, die in der Lage ist, eine Menge von empfangenen Daten zu speichern, die geringer ist als die Datenmenge, die von der ersten Leseanfrage der Schlange (5) angefordert wird.

11. Vorrichtung nach einem der Ansprüche 7 bis 10, **dadurch gekennzeichnet, dass** die Verwaltungseinrichtung (2) in der Lage ist, die erste Leseanfrage der Schlange (5) von Leseanfragen zu löschen, wenn die Schlange (5) mindestens eine Leseanfrage enthält, und wenn die erste Leseanfrage der Schlange (5) von Leseanfragen erledigt wurde.
